# FASCICULE DE BREVET EUROPEEN

(11) **EP 4 154 412 B1**
(45) Date de publication et mention de la délivrance du brevet: **29.11.2023**
(21) Numéro de dépôt: 21725776.5
(22) Date de dépôt: 18.05.2021
(51) Int. Cl.: H04B 1/10, H04B 1/40, H04W 84/18

(54) **PASSERELLE DE COMMUNICATION DESTINÉE À RELIER UN RÉSEAU LPWAN ET UN RÉSEAU CELLULAIRE**
KOMMUNIKATIONSGATEWAY ZUR VERBINDUNG EINES LPWAN-NETZWERKS UND EINES ZELLULAREN NETZWERKS
COMMUNICATION GATEWAY FOR LINKING AN LPWAN NETWORK AND A CELLULAR NETWORK

(30) Priorité: 20.05.2020 FR 2005152
(43) Date de publication de la demande: 29.03.2023
(73) Titulaire: Kerlink, 35235 Thorigne-Fouillard (FR)
(72) Inventeur: GILBERT, Michel, 35235 THORIGNE-FOUILLARD (FR)
(74) Mandataire: Loyer & Abello
(86) Numéro de dépôt international: PCT/EP2021/063161
(87) Numéro de publication internationale: WO 2021/233922

(56) Documents cités:
- CN-A- 109 412 631
- US-A1- 2015 049 651
- US-A1- 2017 230 074

## Description

### Domaine technique

L'invention se rapporte au domaine des communications hertziennes ou radiocommunications ; elle se rapporte plus précisément à une passerelle reliant un réseau conforme à un protocole Low Power Wide Area Network (LPWAN) à un réseau d'accès à un réseau cellulaire (Radio Access Network, RAN) ; et plus précisément encore à une telle passerelle pourvue de filtres au niveau des chaînes de traitement des radiofréquences (chaînes RF), ce qui permet de la miniaturiser.

### Arrière-plan technologique

Dans le contexte du développement de l'Internet des Objets, des objets connectés communiquent par voie hertzienne avec l'Internet. L'Internet est supporté par de grands réseaux d'infrastructure auxquels les objets connectés doivent avoir accès à travers une passerelle. Les objets connectés sont organisés en étoile autour de la passerelle et reliés à celle-ci par voie hertzienne. Les signaux en provenance des objets connectés parviennent à la passerelle sur une première interface et la traversent pour rejoindre, via une seconde interface, un réseau d'infrastructure.

Dans la présente demande, on envisage que cette infrastructure est un réseau cellulaire, par exemple conforme à la norme GSM ou à une norme qui en hérite ; essentiellement 3G, 4G ou 5G. La passerelle a donc une fonction de terminal d'un réseau cellulaire et accède au coeur de réseau par voie hertzienne.

Les objets connectés doivent jouir d'une longue autonomie pour le traitement des signaux et ils doivent pouvoir être disséminés sur une vaste étendue. L'acronyme LPWAN qui résume ces deux exigences essentielles (réseau étendu à faible puissance, la faible puissance permettant la longue autonomie) s'est popularisé chez les hommes de l'art. Ainsi les protocoles qui supportent la communication des objets connectés avec l'Internet doivent être du type LPWAN. Les réseaux LPWAN considérés dans la présente demande sont par exemple conformes à la norme EN 300 220 éditée par l'ETSI. Un exemple de protocole LPWAN conforme à cette norme et dont les spécifications ont été rendues publiques est LoRaWAN^{®}. En toute rigueur, le terme LPWAN s'applique aussi au réseau d'accès des réseaux cellulaires (NB-IoT, LTE-M) mais dans la présente demande, il sera réservé au réseau non cellulaire auquel la passerelle est reliée.

On trouve dans CN 109412631 la divulgation d'une passerelle de communication destinée a relier au moins un réseau LPWAN (LoRaWAN) et au moins un réseau cellulaire (4G)et dans US 2017230074 la divulgation d'une telle architecture et d'une passerelle miniature qui relie une interface LPWAN avec une interface cellulaire. Mais le problème de l'isolation entre les deux chaînes RF n'est pas posé.

### Résumé

Le but de l'invention est d'isoler électromagnétiquement les deux chaînes RF d'une passerelle reliant un réseau LPWAN et un réseau d'accès à un réseau cellulaire et possédant donc deux chaînes RF vers deux tels réseaux respectivement, à un niveau suffisant pour éviter la dégradation du rapport signal-à-bruit sur les récepteurs des chaînes RF lorsque la passerelle est miniature. Plus précisément, le niveau d'isolation recherché par l'invention sur la chaîne RF LPWAN est d'au moins 20 dB et celui recherché sur la chaîne RF cellulaire est d'au moins 20 dB.

Les bandes de fréquences des deux chaînes RF de la passerelle sont voisines voire contigües. Par exemple, dans certains pays d'Europe, on peut selon la réglementation des radiofréquences, utiliser la bande 915 - 918 MHz sur le réseau LPWAN et la bande 880 - 915 MHz pour la liaison montante du réseau cellulaire (bande 8 du LTE). Comme ni l'un ni l'autre des récepteurs ne sont des filtres passe-bandes parfaits, ils absorbent les rayonnements indésirables dans les fréquences voisines de la bande utile donc celles émises par l'autre chaîne RF.

Une idée à la base de l'invention est de miniaturiser la passerelle tout en assurant qu'elle fonctionnera sans perturbation des chaînes RF entre elles. Dans l'application envisagée, l'Internet des Objets, la passerelle doit être petite, de 10 cm environ. La perturbation mutuelle des chaînes RF ne peut être évitée par la solution de simplicité qui consiste à éloigner les antennes. En effet, on considère que pour obtenir une bonne isolation électromagnétique, deux antennes doivent être éloignées au-moins du quart de la longueur des ondes qu'elles émettent ; par exemple, 8,6 cm pour une onde de 868 MHz. Plus généralement, comme la longueur d'onde est inversement proportionnelle à la fréquence, l'éloignement des antennes doit être relativement important pour les basses fréquences, ce qui n'est pas compatible avec les dimensions de la passerelle et les fréquences voulues.

Une autre idée à la base de l'invention est d'isoler les chaînes RF essentiellement au moyen d'un double filtrage : on introduit un filtre passe-bande sur la chaîne RF du LPWAN, dans la partie commune à la réception et à l'émission, d'une part ; un filtre réjecteur sur la chaîne RF du réseau cellulaire. Chacun de ces filtres a pour fonction d'atténuer la puissance des fréquences émises qui gênent l'autre chaîne RF et aussi d'immuniser en réception chaque chaîne RF contre les émissions de l'autre chaîne.

Une autre idée à la base de l'invention est qu'il peut y avoir un ou plusieurs réseaux LPWAN auquel la passerelle donne accès et un ou plusieurs réseaux cellulaires auquel la passerelle donne accès.

Selon un premier objet, l'invention est une passerelle de communication destinée à relier au moins un réseau LPWAN et au moins un réseau cellulaire. La passerelle comprenant :
- une première chaîne RF destinée à communiquer avec ledit au moins un réseau LPWAN, la première chaîne RF comprenant une antenne LPWAN, un transpondeur avec un émetteur et un récepteur et, montés en série entre le transpondeur et l'antenne LPWAN :
   - au moins un bloc de filtrage, comprenant :
      - un bloc d'amplification comprenant une voie montante et une voie descendante montées en parallèle,
      - puis, en allant vers l'antenne LPWAN, une partie commune à la voie montante et à la voie descendante, la partie commune comprenant un filtre passe-bande passant les fréquences dans une bande de fréquences dudit au-moins un réseau LPWAN et atténuant la puissance des fréquences hors de la bande du dit réseau LPWAN,
- et un premier filtre passe-haut ; et
- une deuxième chaîne RF vers le réseau cellulaire, la deuxième chaîne RF convenant pour établir des liaisons montante et descendante avec le réseau cellulaire, une bande de fréquences de la liaison montante et une bande de fréquences de la liaison descendante étant hors de la bande de fréquences du dit réseau LPWAN, la deuxième chaîne RF comprenant une antenne, un modem et, montés en série entre le modem et l'antenne :
   - au moins un filtre réjecteur atténuant la puissance des fréquences dans la bande de fréquences dudit au-moins un réseau LPWAN et passant les fréquences dans la bande de fréquences de la liaison descendante et la bande de fréquences de la liaison montante du réseau cellulaire.

Selon des modes réalisations, la passerelle peut comporter une ou plusieurs des caractéristiques ci-dessous.

Selon un mode de réalisation, la passerelle comporte dans la deuxième chaîne RF un unique filtre réjecteur et un deuxième filtre passe-haut entre le filtre réjecteur et l'antenne.

Avec ce filtre passe-haut, la passerelle est conforme à l'état de l'art d'une chaîne RF cellulaire.

Selon un mode de réalisation, la passerelle comporte dans la deuxième chaîne RF un unique filtre réjecteur relié directement à l'antenne.

Ainsi, ce mode de réalisation fait l'économie d'un filtre passe-haut.

Selon un mode de réalisation, la passerelle est apte à relier, d'une part, un sous-groupe de réseaux LPWAN sélectionnés parmi un groupe de réseaux LPWAN fonctionnant dans des bandes de fréquences respectives et d'autre part, un réseau cellulaire.

Le transpondeur de la première chaîne RF comporte un couple émetteur-récepteur respectif pour chacun des membres du groupe de réseaux LPWAN. La première chaîne RF comporte plusieurs blocs de filtrage, chacun d'eux étant associé à un membre respectif du groupe de réseaux LPWAN et comportant un bloc d'amplification, un filtre passe-bande passant les fréquences dans la bande de fréquences respective dudit membre du groupe de réseaux LPWAN et atténuant la puissance des fréquences hors de cette bande. La première chaîne RF comporte en outre un multiplexeur de réseaux LPWAN, agencé entre les blocs de filtrage et le premier filtre passe-haut.

Dans la deuxième chaîne RF, il y a plusieurs filtres réjecteurs montés en parallèles et associés respectivement à chacun des membres du groupe de réseaux LPWAN, le filtre réjecteur associé à un membre respectif du groupe de réseaux LPWAN atténuant la puissance des fréquences dans la bande de fréquences dudit membre respectif du groupe de réseaux LPWAN. La deuxième chaîne RF comporte en outre un premier et un deuxième multiplexeurs de filtres réjecteurs pour connecter sélectivement les filtres réjecteurs associés à un sous-groupe de réseaux LPWAN sélectionnés, lesquels premier et deuxième multiplexeurs de filtres réjecteurs encadrent les filtres réjecteurs, le deuxième multiplexeur de filtres réjecteurs étant du côté de l'antenne cellulaire.

Ainsi, la passerelle est apte à créer dans son environnement un réseau LPWAN fonctionnant éventuellement sur plusieurs bandes de fréquences.

Selon un mode de réalisation, la passerelle, dans la variante apte à relier un sous-groupe de réseaux LPWAN sélectionnés parmi un groupe et un réseau cellulaire, comporte en outre un bloc de contrôle 16 avec une interface homme - machine qui permet de sélectionner le sous-groupe de réseaux LPWAN et une unité de commande configurée pour programmer le multiplexeur de la première chaîne RF pour qu'il connecte les blocs de filtrage associés aux membres respectifs du sous-groupe de réseaux LPWAN sélectionnés, et pour programmer les premier et deuxième multiplexeurs de la deuxième chaîne RF pour qu'ils connectent les filtres réjecteurs associés aux membres respectifs du sous-groupe de réseaux LPWAN sélectionnés

Selon un mode de réalisation, la passerelle dans sa variante apte à relier un sous-groupe de réseaux LPWAN sélectionnés parmi un groupe à un réseau cellulaire, comporte dans la deuxième chaîne RF un deuxième filtre passe-haut entre le deuxième multiplexeur de filtre réjecteur et l'antenne cellulaire.

Selon un mode de réalisation, la passerelle, dans sa variante apte à relier à un réseau LPWAN sélectionnés parmi un groupe à un réseau cellulaire, comporte dans la deuxième chaîne RF plusieurs filtres réjecteurs et le deuxième multiplexeur de filtre réjecteur est relié directement à l'antenne.

Selon un mode de réalisation de la passerelle, ledit ou chaque bloc de filtrage de la première chaîne RF comporte en outre un sélecteur de voies agencé entre le bloc d'amplification et le filtre passe-bande et configuré pour obtenir un fonctionnement half-duplex dans la bande de fréquences du réseau LPWAN ou du membre respectif du groupe de réseaux LPWAN associé.

Selon un mode de réalisation de la passerelle, le filtre passe-bande dudit ou de chaque bloc de filtrage est configuré pour atténuer d'au moins 20 dB la puissance des fréquences hors de la bande du réseau LPWAN ou du membre respectif du groupe de réseaux LPWAN associé.

Selon un mode de réalisation de la passerelle, ledit ou chaque filtre réjecteur de la deuxième chaîne RF est configuré pour atténuer d'au moins 20 dB la puissance des fréquences dans la bande de fréquences du réseau LPWAN ou du membre respectif du groupe de réseaux LPWAN associé.

Selon un mode de réalisation, la passerelle comporte une carte électronique sur laquelle la première chaîne RF et la deuxième chaîne RF sont montées et dont la taille n'excède pas 12 cm dans les trois dimensions.

Ainsi, on peut miniaturiser la passerelle en étant sûr qu'aucune des chaînes RF ne perturbera à l'émission le fonctionnement de l'autre chaîne RF en réception.

Selon un mode de réalisation, la passerelle selon les variantes ou les modes de réalisation ci-dessus, comporte des chaînes RF adaptées à un écart d'au plus 8 MHz entre les bandes de fréquences des réseaux cellulaires et les bandes de fréquences des dits réseaux LPWAN.

Ainsi, la passerelle est adaptée aux régions du monde où le Législateur a retenu des bandes de fréquences écartées d'au plus 8 MHz pour les réseaux LPWAN et les réseaux cellulaires.

Selon un mode de réalisation, les signaux montant ou descendant sur la première chaîne RF sont conformes à la norme EN 300 220.

Selon un mode de réalisation, le ou les filtres passe-bande sont choisis dans le groupe des filtres à onde acoustique de surface, les filtres à onde acoustique de volume et les filtres en céramique.

Selon un mode de réalisation, le ou les filtres réjecteurs sont choisis dans le groupe constitué des filtres à onde acoustique de surface, les filtres à onde acoustique de volume et les filtres en céramique.

Selon un mode de réalisation, l'isolation des première et deuxième chaînes RF est complétée par une ou plusieurs techniques d'isolation d'antennes choisies dans le groupe du découplage d'antennes, de l'addition d'éléments d'antennes parasites, des structures à terre défectueuses, des lignes neutralisantes, des parois diélectriques, des métamatériaux.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] représente une architecture globale d'un réseau LoRaWAN^{®} où une passerelle selon l'invention est susceptible d'être utilisée.
[Fig.2] La [Fig.2] représente l'architecture de la passerelle.
[Fig.3] La [Fig.3] représente l'unité de contrôle de la passerelle.
[Fig.4] La [Fig.4] représente la chaîne RF LPWAN selon un premier mode de réalisation de l'invention.
[Fig.5] La [Fig.5] représente la chaîne RF cellulaire selon un premier mode de réalisation de l'invention.
[Fig.6] La [Fig.6] représente la chaîne RF LPWAN selon un deuxième mode de réalisation de l'Invention adapté à plusieurs réseaux LPWAN.
[Fig.7] La [Fig.7] représente la chaîne RF cellulaire selon un deuxième mode de réalisation de l'invention adapté à plusieurs réseaux LPWAN.

### Description des modes de réalisation

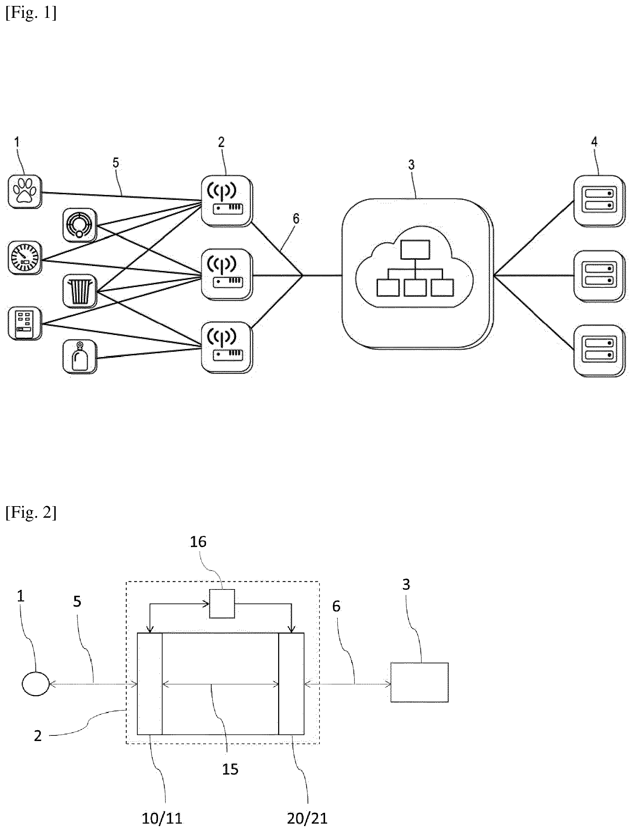

Dans la [Fig.1], des objets connectés 1 communiquent avec des serveurs d'application 4.

Dans un sens, les objets connectés 1 émettent des données. Les objets connectés 1 sont en général des capteurs tels que des puces électroniques pour suivre les animaux de compagnie, des détecteurs de fumée, des compteurs d'eau, des puces d'inspection des poubelles, des compteurs de distributeurs automatiques, des compteurs de gaz. Ils prennent des mesures qu'ils numérisent. Ils les envoient vers des serveurs d'application 4 qui les enregistrent, leur appliquent divers traitements, les redistribuent. Dans l'autre sens, les serveurs d'application 4 télécommandent les objets connectés 1. Le réseau de données typique auquel sont reliés les serveurs est l'Internet et l'architecture typique qui met en oeuvre ce schéma de communication est « l'internet des objets ».

Dans cette architecture, les objets connectés 1 communiquent d'abord via une liaison hertzienne 5 avec une passerelle 2. La liaison hertzienne 5 entre les objets connectés 1 et la passerelle 2 est du type LPWAN, elle est conforme à la norme EN 300 220 ; par exemple et non limitativement elle est conforme aux spécifications publiques LoRaWAN^{®} de la LoRa Alliance^{®}, un consortium d'industriels qui promeut ces spécifications.

La passerelle 2 retransmet les signaux 5 en provenance des objets connectés 1 vers un réseau d'infrastructure. Dans la présente demande, le réseau d'infrastructure est un réseau cellulaire, conforme à la norme GSM ou à une norme qui en hérite : 3G, 4G ou 5G pour citer les principales normes. La passerelle 2 est donc un terminal d'accès à un réseau cellulaire et communique avec le coeur du réseau cellulaire par voie hertzienne via un réseau d'accès 6. Les signaux 6 atteignent le coeur du réseau cellulaire par des serveurs d'accès 3. Le réseau d'accès au coeur du réseau cellulaire sera abrégé en « réseau cellulaire » dans le reste de la demande sauf s'il est nécessaire d'être plus précis.

Si ce sont les serveurs d'application 4 qui télécommandent les objets connectés 1, les communications suivent le chemin inverse.

Les fréquences utilisées dans les liaisons hertziennes du réseau LPWAN ou du réseau cellulaire dépendent du pays où la passerelle fonctionne. Elles sont définies au niveau mondial par le traité international objet du Règlement de l'UIT-R (Union Internationale des Télécommunications, secteur des Radiocommunications) qui attribue, selon le terme technique, c'est-à-dire destine les différentes fréquences à différents Services dans les trois Régions du monde (« Règlement », « Service » et « Région » sont ici les termes techniques de l'UIT-R) et impose des diagrammes de rayonnement aux émetteurs dans ces fréquences ; puis au niveau national ces règles sont précisées et le droit d'exploitation des fréquences est défini. Les fréquences des réseaux cellulaires en un lieu donné font l'objet de concessions de l'Etat local avec un principe d'exclusivité tandis que les fréquences du LPWAN sont d'utilisation gratuite et peuvent être partagées par plusieurs opérateurs qui doivent alors se coordonner pour fonctionner ensemble.

« Bande » est employé dans la suite de la demande par abréviation de « bande de fréquences ».

La passerelle 2 est adaptable à tout ensemble cohérent de réglementations nationales (cohérent en ce sens que des bandes d'attributions différentes ne se recoupent pas). Dans une variante, elle peut n'être adaptée qu'à une partie des bandes destinées au LPWAN et aux communications cellulaires de la réglementation d'un unique état. Dans une autre variante, elle peut être adaptée à toutes les bandes destinées au LPWAN et aux communications cellulaires de la réglementation d'un état donné.

Par exemple, la passerelle 2 est adaptée à l'une ou plusieurs des réglementations suivantes.
- Europe (Région 1) :
   - Bandes du LPWAN : 868 - 870 MHz, 863 - 870 MHz, 863 - 876 MHz, 915 - 918 MHz ou 915 - 921 MHz suivant les pays
   - Bandes du réseau cellulaire :
      - bande 8 du LTE : liaison montante : 880 - 915 MHz ; liaison descendante : 925 - 960 MHz
      - bande 20 du LTE : liaison montante : 832 - 862 MHz ; liaison descendante : 791 - 821MHz
- Amérique du Nord (Région 2) :
   - bandes du LPWAN : 902 - 928 MHz
   - bandes du réseau cellulaire (bande 8 du LTE) : liaison montante : 824 - 849 MHz ; liaison descendante : 869 - 894MHz
- Amérique du Sud (Région 2), Australie et Nouvelle Zélande (Région 3) :
   - bandes du LPWAN : 915 - 928 MHz
   - bandes du réseau cellulaire
      - bande 8 du LTE : liaison montante : 890 - 915 MHz ; liaison descendante : 935 - 960MHz
      - bande 5 du LTE : liaison montante : 824 - 849 MHz ; liaison descendante : 869 - 894MHz
- Asie, Thaïlande, Taiwan et Singapour (Région 3) :
   - bandes du LPWAN : 920 - 925 MHz
   - bande 8 du LTE : liaison montante : 885 - 915 MHz ; liaison descendante : 930 - 960 MHz.

Les réseaux LPWAN sont symétriques en ce sens qu'étant donnée une fréquence utilisable sur un tel réseau, un terminal tel qu'un des objets connectés 1 ou la passerelle 2 peut émettre ou recevoir à cette fréquence. Les réseaux d'accès cellulaires sont asymétriques : du terminal telle que la passerelle 2 vers le coeur du réseau auquel le terminal est abonné, on parle de liaison montante et dans l'autre direction, de liaison descendante et les fréquences d'une liaison montante et d'une liaison descendante du réseau sont nécessairement différentes.

L'architecture et le fonctionnement de la passerelle sont illustrés sur la [Fig.2]. La passerelle 2 reçoit des signaux par voie hertzienne sur sa chaîne RF 10/11 adaptée à des réseaux LPWAN, les démodule et les transmet suivant un circuit électrique interne 15 à la chaîne RF 20/21, adaptée à des réseaux cellulaires, qui les module et les émet par voie hertzienne vers le coeur du réseau cellulaire. Les communications peuvent suivre le chemin inverse.

Les dimensions de la passerelle 2 sont de préférence de l'ordre de grandeur des objets connectés 1. Ainsi le demandeur a réalisé un prototype de la passerelle monté sur une carte électronique de 8 cm environ.

Chaque chaîne RF 10, 20 en tant qu'elle émet perturbe l'autre chaîne RF 20, 10 respectivement en tant que celle-ci reçoit. Il est donc utile d'isoler électromagnétiquement les chaînes RF10, 20 entre elles, d'autant plus que la passerelle 2 est petite.

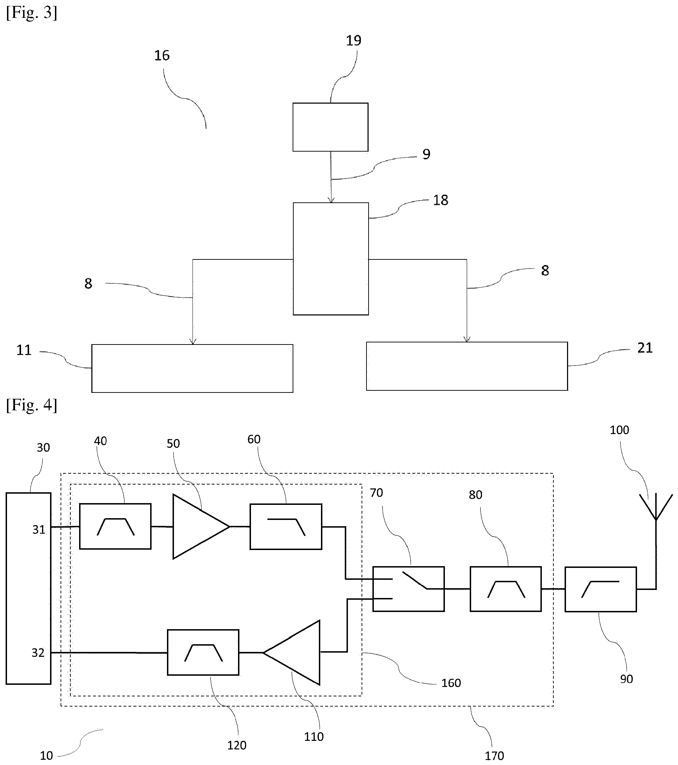

La [Fig.4] représente la chaîne RF LPWAN 10 de la passerelle 2 dans un premier mode de réalisation de l'invention. La chaîne RF 10 comporte une unité en bande de base non représentée, un transpondeur 30. Une voie d'émission conduisant le signal montant part du point 31 du transpondeur et une voie de réception conduisant le signal descendant aboutit au point 32 du transpondeur. Sur la voie d'émission, le signal montant est d'abord filtré par un filtre passe-bande 40, puis amplifié par un amplificateur de puissance 50, puis filtré par un filtre passe-bas 60, par un filtre passe-bande 80 et finalement par un filtre passe-haut 90 et il arrive à l'antenne 100. A la réception, le signal provient de l'antenne 100, il est filtré par le filtre passe-haut 90, puis le filtre passe-bande 80 qui sont donc communs à la voie montante et à la voie descendante, de même que l'antenne 100. Le signal descendant est ensuite amplifié par un amplificateur à faible bruit 110 et enfin filtré par un filtre passe-bande 120 avant d'atteindre le transpondeur 30.

En l'état de la réglementation en 2020, en Europe au-moins, les bandes de fréquences en émission et en réception dans les réseaux LPWAN sont communes. Les antennes LPWAN fonctionnent donc alternativement en mode émission ou en mode réception (fonctionnement half-duplex) et il faut prévoir dans la chaîne RF un sélecteur 70 pour relier la voie montante ou la voie descendante et la partie de la chaîne RF commune aux deux voies.

Les évolutions futures de la réglementation des bandes attribuées au LPWAN permettront probablement l'usage des bandes de fréquences LPWAN simultanément en réception et en émission (fonctionnement full-duplex). La passerelle 2 comportera alors un duplexeur en lieu et place du sélecteur 70 et du filtre passe-bande 80.

Les éléments entre le transpondeur 30 et le sélecteur 70 forment un bloc d'amplification 160. Le bloc d'amplification 160, le sélecteur 70 et le filtre passe-bandes 80 forment un bloc de filtrage. Les notions de bloc d'amplification et de bloc de filtrage sont introduites par commodité pour la clarté de la description.

Le filtre 80 laisse passer les bandes du LPWAN à l'émission et élimine les bandes en dehors. En réalité, il n'y a pas de véritable élimination mais une atténuation. Ainsi le filtre 80 atténue la puissance des fréquences émises par la chaîne RF LPWAN 10 qui gênent la réception dans la chaîne RF cellulaire 20 c'est-à-dire celles qui sont dans les bandes de la liaison descendante du réseau cellulaire.

Mais ce filtre a de plus l'avantage d'atténuer les fréquences émises par la chaîne RF cellulaire 20 (les fréquences de la liaison montante du réseau cellulaire) qui gênent la réception dans la chaîne RF LPWAN 10.

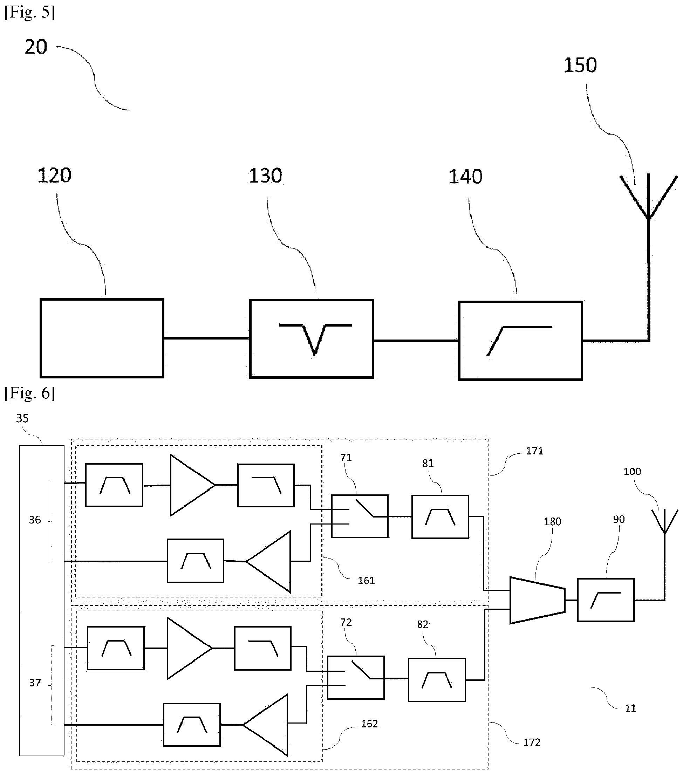

La [Fig.5] représente la chaîne RF cellulaire 20 de la passerelle 2 dans le premier mode de réalisation de l'invention. La chaîne RF comporte un modem 120 qui inclut l'unité bande-de-base et le transpondeur, un filtre réjecteur 130, et une antenne 150. Il est avantageux d'insérer un filtre passe-haut 140 entre le filtre réjecteur 130 et l'antenne 150 car on reste ainsi conforme à l'état de l'art ce qui permet de réduire les coûts d'industrialisation. Il existe une unique voie commune au signal montant et au signal descendant. Le modem 120 est universel, adapté à toutes les fréquences cellulaires dans le monde.

Le filtre 130 a pour fonction d'atténuer la puissance des fréquences émises par la chaîne RF cellulaire 20 (les fréquences dans bandes de la liaison montante du réseau cellulaire) qui gênent la réception dans la chaîne RF LPWAN 10. Mais il a aussi l'avantage d'atténuer les fréquences de la chaîne RF LPWAN 10 qui gênent la réception dans la chaîne RF cellulaire 20.

Un exemple de la passerelle 2 a été conçu et réalisé pour fonctionner dans la bande 868 - 870 MHz des LPWAN et dans les bandes de 700 MHz à 2200 MHz des réseaux cellulaires LTE. La passerelle est prévue pour être utilisée dans la zone du monde dite EMEA (de l'anglais Europe, Middle East, Africa). Le filtre passe-bande 80 inséré dans la chaîne RF LPWAN 10 est un filtre à onde acoustique de surface (Surface Acoustic Wave, SAW filter) du modèle B3430 du fabricant RF360. Ce filtre atténue la puissance des fréquences émises dans la bande de la liaison descendante du LTE de 40 dB au minimum (division de la puissance par 10 000). Le filtre réjecteur 130 inséré dans la chaîne RF cellulaire 20 est un filtre à onde acoustique de surface du modèle WFB88C0869FH du fabricant NDK, qui atténue la puissance des fréquences émises dans la bande du LPWAN 868 - 870 MHz à hauteur de 20 dB au minimum (division par 100 de la puissance) et typiquement à hauteur de 33 dB (division de la puissance par 2000).

Un autre exemple de la passerelle 2 a été conçu et réalisé pour fonctionner dans la bande 902 - 928 MHz des LPWAN et dans les bandes de 700 MHz à 2200 MHz des réseaux cellulaires LTE. La passerelle est prévue pour être utilisée en Amérique du Nord (USA, Canada, Mexique). Le filtre passe-bande 80 inséré dans la chaîne RF LPWAN 10 est un filtre à onde acoustique de surface du modèle B2672 du fabricant RF360. Ce filtre atténue la puissance des fréquences du LTE de 20 dB au minimum (division de la puissance par 100) et typiquement à hauteur de 30 dB (division de la puissance par 1000). Le filtre réjecteur 130 inséré dans la chaîne RF cellulaire 20 est un filtre à onde acoustique de surface du modèle WFH24A0915FE du fabricant NDK, qui atténue la puissance des fréquences dans la bande 902 - 928 MHz à hauteur de 20 dB typiquement (division par 100 de la puissance).

Ces composants du commerce sont cités à titre illustratif ce qui n'exclut pas d'en utiliser d'autres. D'autres types de filtres seraient utilisables comme des filtres à onde acoustique de volume (de l'anglais Bulk Acoustic Wave, BAW filter) et des filtres en céramique.

On peut compléter l'isolation par des techniques de conception des antennes. Citons le découplage d'antennes qui permet un niveau d'isolation de 10 à 15 dB aux fréquences voulues ; les éléments d'antenne parasites (éléments radiatifs non alimentés électriquement), permettant 20 dB d'isolation ; les structures à terre défectueuse (de l'anglais Defected Ground Structures terme pour lequel il n'existe pas d'équivalent français consacré ; terre est pris au sens de point électrique neutre), permettant 20 dB d'isolation ; les lignes neutralisantes, permettant 15 dB d'isolation ; les parois diélectriques, permettant 15 dB d'isolation ; les « métamatériaux » (matériaux ouvragés au niveau microscopique pour obtenir de bonnes propriétés électromagnétiques), permettant 25 dB d'isolation.

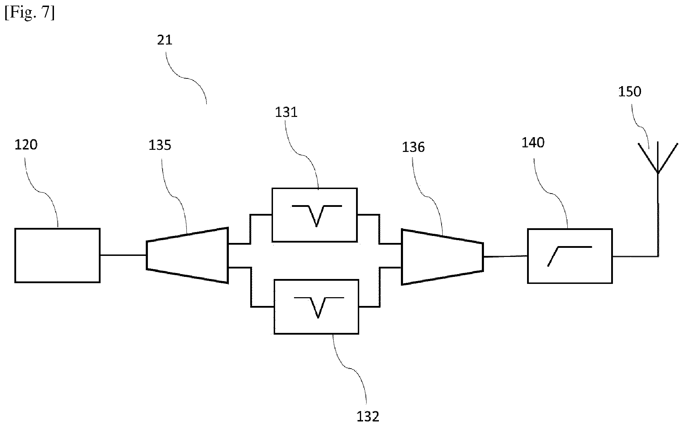

Les figures 6 et 7 montrent un deuxième mode de réalisation de la passerelle 2 où celle-ci est apte à se connecter à un sous-groupe de réseaux LPWAN sélectionnés parmi tout un groupe. On peut imaginer le cas d'usage par exemple d'un gérant de boutique qui veuille rassembler tous les compteurs de sa boutique (compteur électrique, compteur de gaz etc.) dans un seul et même réseau ; et les distributeurs automatiques sur un second réseau.

Chacun des réseaux du groupe est caractérisé par une bande de fréquence respective. La [Fig.6] montre la chaîne RF LPWAN 11. Elle a été représentée dans une variante adaptée à un groupe de deux réseaux LPWAN mais se généralise facilement à un nombre indéfini de réseaux LPWAN. Le transpondeur 35 comporte un couple émetteur - récepteur respectif 36, 37 pour chaque réseau LPWAN. Chacun des blocs de filtrage 171, 172 est associé à un réseau LPWAN respectif et comporte un bloc d'amplification 161, 162 respectivement, si besoin un sélecteur de voies 71, 72 respectivement, un filtre passe-bande 81, 82 respectivement passant les fréquences dans la bande de fréquences du réseau LPWAN respectif et atténuant la puissance des fréquences hors de la bande de fréquences de ce réseau. Un multiplexeur 180 connecte le ou les blocs de filtrage sélectionnés 171 ou 172 vers la partie de la chaîne RF LPWAN 11 commune à tous les blocs de filtrage et vers l'antenne 100.

La sélection du sous-groupe de réseaux LPWAN est réalisée au moyen du bloc de contrôle 16 représenté sur la [Fig.3]. L'utilisateur a accès au bloc de contrôle 16 par une interface homme - machine 19. L'interface homme - machine 19 lui présente le groupe de réseaux LPWAN disponibles et l'utilisateur en sélectionne un certain nombre en fonction du ou des réseaux qu'il veut créer.

L'interface homme - machine 19 transmet la liste des réseaux sélectionnés à l'unité de commande 18. L'unité de commande 18 programme alors la chaîne RF LPWAN 11 (et la chaîne RF cellulaire 21 comme décrit plus loin) par la commande 8. Dans la chaîne RF LPWAN 11, elle programme le multiplexeur 180 comme déjà décrit pour qu'il connecte le sous-groupe des réseaux sélectionnés à l'antenne 100 (via d'autres éléments).

La [Fig.7] montre la chaîne RF cellulaire 21 dans un mode de réalisation de la passerelle 2 où elle est apte à se connecter à un sous-groupe de réseaux LPWAN choisis parmi tout un groupe. De même que la chaîne RF LPWAN 11, la chaîne RF cellulaire 21 a été représentée dans une variante adaptée à deux réseaux LPWAN mais se généralise facilement à un nombre indéfini de réseaux LPWAN. Elle comporte plusieurs filtres réjecteurs 131, 132 montés en parallèles et associés respectivement à chacun des réseaux LPWAN auquel la passerelle 2 est apte à se connecter. Le filtre réjecteur associé à un réseau LPWAN respectif atténue la puissance des fréquences émise par la chaîne RF cellulaire 21 (les fréquences dans la bande de la liaison montante du réseau cellulaire) qui se trouvent dans la bande de fréquences de ce réseau LPWAN. De part et d'autre des filtres réjecteurs 131, 132, il y a des multiplexeurs 135, 136 qui permettent de sélectionner le ou les filtres réjecteurs, 131 par exemple, correspondant au sous-groupe de réseaux LPWAN sélectionnés. Le réglage des multiplexeurs 135, 136 est donc lié à celui du multiplexeur 180, et quand l'utilisateur choisit un réseau LPWAN, tous les éléments, le bloc de filtrage 171 de la chaîne RF LPWAN 11, en supposant que c'est celui qui a été choisi, le multiplexeur 180 de la chaîne RF LPWAN 11, les multiplexeurs 135, 136 de la chaîne RF cellulaire 21, le filtre réjecteur 131 de la chaîne RF cellulaire 21, en supposant que c'est celui qui correspond au bloc de filtrage 171 de la chaîne RF LPWAN, sont convenablement réglés par la même occasion.

En fait l'unité de commande 18 envoie à la chaîne RF cellulaire 21 pour les réglages qui lui sont spécifiques une commande 8 semblable à celle envoyée à la chaîne RF LPWAN. Si par la suite, l'utilisateur décide de reprogrammer la chaîne RF LPWAN, une nouvelle commande 8 sera envoyée en conséquence aux deux chaînes RF 11, 21.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Passerelle de communication (2) destinée à relier au moins un réseau LPWAN et au moins un réseau cellulaire, la passerelle comprenant :
• une première chaîne RF (10) destinée à communiquer avec ledit au moins un réseau LPWAN, la première chaîne RF comprenant une antenne LPWAN (100), un transpondeur (30) avec un émetteur (31) et un récepteur (32) et, montés en série entre le transpondeur et l'antenne LPWAN (100):
• au moins un bloc de filtrage (170), comprenant :
• un bloc d'amplification (160) comprenant une voie montante et une voie descendante montées en parallèle,
• puis, en allant vers l'antenne LPWAN (100), une partie commune à la voie montante et à la voie descendante, la partie commune comprenant un filtre passe-bande (80) passant les fréquences dans une bande de fréquences dudit au moins un réseau LPWAN, atténuant la puissance des fréquences hors de la bande du dit réseau LPWAN,
• et un premier filtre passe-haut (90) ; et
• une deuxième chaîne RF (20) vers ledit réseau cellulaire, la deuxième chaîne RF convenant pour établir des liaisons montante et descendante avec le réseau cellulaire, une bande de fréquences de la liaison descendante et une bande de fréquences de la liaison montante du réseau cellulaire étant hors de la bande dudit réseau LPWAN, la deuxième chaîne RF comprenant une antenne cellulaire (150), un modem (120) et, montés en série entre le modem et l'antenne :
• au moins un filtre réjecteur (130) atténuant la puissance des fréquences dans la bande de fréquences dudit au moins un réseau LPWAN et passant les fréquences dans la bande de fréquences de la liaison descendante et la bande de fréquences de la liaison montante du réseau cellulaire.

2. Passerelle selon la revendication 1, dans laquelle la deuxième chaîne RF (20) comporte un unique filtre réjecteur (130) et un deuxième filtre passe-haut (140) entre le filtre réjecteur (130) et l'antenne cellulaire (150).

3. Passerelle selon la revendication 1, dans laquelle la deuxième chaîne RF (20) comporte un unique filtre réjecteur (130) relié directement à l'antenne cellulaire (150).

4. Passerelle selon la revendication 1, destinée à relier, d'une part, un sous-groupe de réseaux LPWAN sélectionnés parmi un groupe de réseaux LPWAN fonctionnant dans des bandes de fréquences respectives et d'autre part, un réseau cellulaire, dans laquelle :
• le transpondeur (35) de la première chaîne RF (11) comporte un couple émetteur-récepteur respectif (36, 37) pour chacun des membres du groupe de réseaux LPWAN,
• la première chaîne RF comporte une pluralité de blocs de filtrage, chacun des blocs de filtrage (171, 172) étant associé à un membre respectif du groupe de réseaux LPWAN et comportant un bloc d'amplification (161, 162), un filtre passe-bande (81, 82) passant les fréquences dans la bande de fréquences du dit membre respectif du groupe de réseaux LPWAN et atténuant la puissance des fréquences hors de la bande du dit membre respectif du groupe de réseaux LPWAN
• la première chaîne RF (21) comporte en outre un multiplexeur (180) de réseaux LPWAN, agencé entre les blocs de filtrage (171, 172) et le premier filtre passe-haut (90) ;
• la deuxième chaîne RF comporte plusieurs filtres réjecteurs (131,132) montés en parallèles et associés respectivement à chacun des membres du groupe de réseaux LPWAN, le filtre réjecteur associé à un membre respectif du groupe de réseaux LPWAN atténuant la puissance des fréquences dans la bande du dit membre respectif du groupe de réseaux LPWAN et passant les fréquences dans la bande de fréquences de la liaison descendante et la bande de fréquences de la liaison montante du réseau cellulaire ;
• la deuxième chaîne RF comporte en outre un premier (135) et un deuxième (136) multiplexeurs de filtres réjecteurs pour connecter sélectivement les filtres réjecteurs associés à un sous-groupe de réseaux LPWAN sélectionnés, lesquels premier (135) et deuxième (136) multiplexeurs de filtres réjecteurs encadrent les dits plusieurs filtres réjecteurs (131, 132), le deuxième multiplexeur (136) de filtres réjecteurs étant du côté de l'antenne cellulaire (150).

5. Passerelle selon la revendication 4 comportant en outre un bloc de contrôle (16), le bloc de contrôle (16) comprenant :
• une interface homme- machine (19) qui permet de sélectionner le sous-groupe de réseaux LPWAN ;
• une unité de commande (18) configurée pour programmer le multiplexeur (180) de la première chaîne RF (11) pour que le multiplexeur (180) connecte les blocs de filtrage (171, 172) associés aux membres respectifs du sous-groupe de réseaux LPWAN sélectionnés, et pour programmer les premier et deuxième multiplexeurs (135, 136) de la deuxième chaîne RF pour qu'ils connectent les filtres réjecteurs (131, 132) associés aux membres respectifs du sous-groupe de réseaux LPWAN sélectionnés.

6. Passerelle selon l'une des revendications 4 et 5, dans laquelle la deuxième chaîne RF (21) comporte un deuxième filtre passe-haut (140) entre le deuxième multiplexeur (136) de filtres réjecteurs et l'antenne cellulaire (150).

7. Passerelle selon l'une des revendications 4 et 5, dans laquelle le deuxième multiplexeur (136) de filtre réjecteurs de la deuxième chaîne RF est relié directement à l'antenne cellulaire.

8. Passerelle selon l'une des revendications 1 à 7, dans laquelle ledit ou chaque bloc de filtrage (170, 171, 172) de la première chaîne RF comporte en outre un sélecteur de voies (70) agencé entre le bloc d'amplification (160, 161, 162) et le filtre passe-bande (80, 81, 82) et configuré pour obtenir un fonctionnement half-duplex dans la bande de fréquences du réseau LPWAN ou du membre respectif du groupe de réseaux LPWAN associé.

9. Passerelle selon l'une des revendications 1 à 8, dans laquelle ledit filtre passe-bande (80, 81, 82) dudit ou de chaque bloc de filtrage est configuré pour atténuer d'au moins 20 dB la puissance des fréquences hors de la bande du réseau LPWAN ou du membre respectif du groupe de réseaux LPWAN associé.

10. Passerelle selon l'une des revendications 1 à 9, dans laquelle ledit ou chaque filtre réjecteur (131, 132) de la deuxième chaîne RF est configuré pour atténuer d'au moins 20 dB la puissance des fréquences dans la bande de fréquences du réseau LPWAN ou du membre respectif du groupe de réseaux LPWAN associé.

11. Passerelle selon l'une quelconque des revendications précédentes, comportant une carte électronique sur laquelle la première chaîne RF (10, 11) et la deuxième chaîne RF (20, 21) sont montées et dont la taille n'excède pas 12 cm dans les trois dimensions.

12. Passerelle selon l'une quelconque des revendications précédentes, dans laquelle lesdites première (10, 11) et deuxième (20, 21) chaînes RF sont adaptées à un écart d'au plus 8 MHz entre l'une quelconque des bandes de fréquences du réseau cellulaire et la bande de fréquences du ou chaque membre du groupe de réseaux LPWAN.

13. Passerelle selon l'une quelconque des revendications précédentes, dans laquelle les signaux montant ou descendant sur la première chaîne RF sont conformes à la norme EN 300 220.

14. Passerelle selon l'une des revendications précédentes, dans laquelle le ou les filtres passe-bande sont choisis dans le groupe des filtres à onde acoustique de surface, des filtres à onde acoustique de volume et des filtres en céramique.

15. Passerelle selon l'une des revendications précédentes, dans laquelle le ou les filtres réjecteurs sont choisis dans le groupe des filtres à onde acoustique de surface, des filtres à onde acoustique de volume et des filtres en céramique.

16. Passerelle selon l'une des revendications précédentes, dans laquelle l'isolation des première et deuxième chaînes RF est complétée par une ou plusieurs techniques d'isolation d'antennes choisies dans le groupe du découplage d'antennes, de l'addition d'éléments d'antennes parasites, des structures à terre défectueuses, des lignes neutralisantes, des parois diélectriques, des métamatériaux.

## Patentansprüche

1. Kommunikations-Gateway (2), das dazu bestimmt ist, mindestens ein LPWAN-Netzwerk und mindestens ein Mobilfunknetz zu verbinden, wobei das Gateway umfasst:
• eine erste RF-Kette (10), die dazu bestimmt ist, mit dem mindestens einen LPWAN-Netzwerk zu kommunizieren, wobei die erste RF-Kette eine LPWAN-Antenne (100), einen Transponder (30) mit einem Sender (31) und einen Empfänger (32), welche in Reihe zwischen dem Transponder und der LPWAN-Antenne (100) montiert sind, umfasst:
• mindestens einen Filterblock (170), umfassend:
• einen Verstärkungsblock (160), der einen Uplink-Kanal und einen Downlink-Kanal umfasst, die parallel montiert sind,
• weiterhin in Richtung der LPWAN-Antenne (100), einen gemeinsamen Teil des Uplink-Kanals und des Downlink-Kanals, wobei der gemeinsame Teil einen Bandpassfilter (80) umfasst, der die Frequenzen in einem Frequenzband des mindestens einen LPWAN-Netzwerks durchlässt und die Leistung der Frequenzen außerhalb des Bandes des LPWAN-Netzwerks dämpft,
• und einen ersten Hochpassfilter (90); und
• eine zweite RF-Kette (20) zu dem Mobilfunknetz, wobei die zweite RF-Kette zum Aufbau von Uplinks und Downlinks mit dem Mobilfunknetz geeignet ist, wobei ein Downlink-Frequenzband und ein Uplink-Frequenzband des Mobilfunknetzes außerhalb des Bandes des LPWAN-Netzwerks liegen, wobei die zweite RF-Kette umfasst eine Mobilfunkantenne (150), ein Modem (120) und, in Reihe zwischen dem Modem und der Antenne montiert:
• mindestens einen Bandsperrfilter (130), welcher die Leistung der Frequenzen im Frequenzband des mindestens einen LPWAN-Netzwerks dämpft und die Frequenzen im Downlink-Frequenzband und im Uplink-Frequenzband des Mobilfunknetzes durchlässt.

2. Gateway gemäß Anspruch 1, wobei die zweite RF-Kette (20) einen einzelnen Bandsperrfilter (130) und einen zweiten Hochpassfilter (140) zwischen dem Bandsperrfilter (130) und der Mobilfunkantenne (150) umfasst.

3. Gateway gemäß Anspruch 1, wobei die zweite RF-Kette (20) einen einzelnen Bandsperrfilter (130) umfasst, der direkt mit der Mobilfunkantenne (150) verbunden ist.

4. Gateway gemäß Anspruch 1, das dazu bestimmt ist, einerseits eine Untergruppe von LPWAN-Netzwerken, die aus einer Gruppe von LPWAN-Netzwerken ausgewählt werden, die in jeweiligen Frequenzbändern arbeiten, und andererseits ein Mobilfunknetz zu verbinden, in dem:
• der Transponder (35) der ersten RF-Kette (11) ein jeweiliges Transceiver-Paar (36, 37) für jedes der Mitglieder der LPWAN-Netzwerkgruppe umfasst,
• die erste RF-Kette eine Vielzahl von Filterblöcken umfasst, wobei jeder der Filterblöcke (171, 172) einem jeweiligen Mitglied der LPWAN-Netzwerkgruppe zugeordnet ist und einen Verstärkungsblock (161, 162), ein Bandpassfilter (81, 82), der Frequenzen innerhalb des Frequenzbands des jeweiligen Mitglieds der LPWAN-Netzwerkgruppe durchlässt und die Leistung der Frequenzen außerhalb des Bands des jeweiligen Mitglieds der LPWAN-Netzwerkgruppe abschwächt, umfasst;
• die erste RF-Kette (21) weiterhin einen LPWAN-Netzwerkmultiplexer (180), der zwischen den Filterblöcken (171, 172) und dem ersten Hochpassfilter (90) angeordnet ist, umfasst;
• die zweite RF-Kette mehrere Bandsperrfilter (131,132), die parallel montiert und jeweils jedem Mitglied der Gruppe von LPWAN-Netzwerken zugeordnet sind, umfasst, wobei der Bandsperrfilter, der einem jeweiligen Mitglied der Gruppe von LPWAN-Netzwerken zugeordnet ist, die Leistung der Frequenzen in dem Band des jeweiligen Mitglieds der LPWAN-Netzwerkgruppe dämpft und die Frequenzen im Downlink-Frequenzband und im Uplink-Frequenzband des Mobilfunknetzes durchlässt;
• die zweite RF-Kette weiterhin einen ersten (135) und zweiten (136) Bandsperrfilter-Multiplexer zum selektiven Verbinden der Bandsperrfilter, die einer Untergruppe ausgewählter LPWAN-Netzwerke zugeordnet sind, umfasst, wobei die ersten (135) und zweiten (136) Bandsperrfilter-Multiplexer die mehreren Bandsperrfilter (131, 132) umgibt, wobei sich der zweite Bandsperr- Multiplexer (136) auf der Seite der Mobilfunkantenne (150) befindet.

5. Gateway gemäß Anspruch 4, weiterhin umfassend einen Steuerblock (16), wobei der Steuerblock (16) umfasst:
• eine Mensch-Maschine-Schnittstelle (19) zum Auswählen der LPWAN-Netzwerkuntergruppe;
• eine Steuereinheit (18), die so konfiguriert ist, dass sie den Multiplexer (180) der ersten RF-Kette (11) so programmiert, dass der Multiplexer (180) die Filterblöcke (171, 172) verbindet, die den jeweiligen Mitgliedern der ausgewählten LPWAN-Netzwerkuntergruppe zugeordnet sind, und um den ersten und zweiten Multiplexer (135, 136) der zweiten RF-Kette zu programmieren, damit sie die Bandsperrfilter (131, 132), die den jeweiligen Mitgliedern der ausgewählten LPWAN-Netzwerkuntergruppe zugeordnet sind, verbinden.

6. Gateway gemäß einem der Ansprüche 4 und 5, wobei die zweite RF-Kette (21) einen zweiten Hochpassfilter (140) zwischen dem zweiten Bandsperrfilter-Multiplexer (136) und der Mobilfunkantenne (150) umfasst.

7. Gateway gemäß einem der Ansprüche 4 und 5, wobei der zweite Bandsperrfilter-Multiplexer (136) der zweiten RF-Kette direkt mit der Mobilfunkantenne verbunden ist.

8. Gateway gemäß einem der Ansprüche 1 bis 7, wobei der oder jeder Filterblock (170, 171, 172) der ersten RF-Kette außerdem einen Kanalwähler (70) umfasst, der zwischen dem Verstärkungsblock (160, 161, 162) und dem Bandpassfilter (80, 81, 82) angeordnet ist und konfiguriert ist, um einen Halbduplexbetrieb im Frequenzband des LPWAN-Netzwerks oder des jeweiligen Mitglieds der zugehörigen LPWAN-Netzwerkgruppe zu erreichen.

9. Gateway gemäß einem der Ansprüche 1 bis 8, wobei der Bandpassfilter (80, 81, 82) des oder jeden Filterblocks so konfiguriert ist, dass er die Leistung von Frequenzen außerhalb des Bandes des LPWAN-Netzwerks oder das jeweiligen Mitglieds der zugehörigen LPWAN-Netzwerkgruppe um mindestens 20 dB dämpft.

10. Gateway gemäß einem der Ansprüche 1 bis 9, wobei der oder jeder Bandsperrfilter (131, 132) der zweiten RF-Kette so konfiguriert ist, dass er die Leistung der Frequenzen im Frequenzband des LPWAN-Netzwerks oder des jeweiligen Mitglieds der zugehörigen LPWAN-Netzwerkgruppe um mindestens 20 dB dämpft.

11. Gateway gemäß einem der vorstehenden Ansprüche, umfassend eine elektronische Karte, auf der die erste RF-Kette (10, 11) und die zweite RF-Kette (20, 21) montiert sind und deren Größe in allen drei Maßen 12 cm nicht überschreitet.

12. Gateway gemäß einem der vorstehenden Ansprüche, wobei die ersten (10, 11) und zweiten (20, 21) RF-Ketten an einen Abstand von höchstens 8 MHz zwischen einem beliebigen Frequenzband des Mobilfunknetzes und dem Frequenzband des oder jedes Mitglieds der LPWAN-Netzwerkgruppe angepasst sind.

13. Gateway gemäß einem der vorstehenden Ansprüche, wobei die Uplink- oder Downlink-Signale auf der ersten RF-Kette der Norm EN 300 220 entsprechen.

14. Gateway gemäß einem der vorstehenden Ansprüche, wobei der oder die Bandpassfilter aus der Gruppe der Oberflächenwellenfilter, Volumenwellenfilter und Keramikfilter ausgewählt sind.

15. Gateway gemäß einem der vorstehenden Ansprüche, wobei der oder die Bandsperrfilter aus der Gruppe der Oberflächenwellenfilter, Volumenwellenfilter und Keramikfilter ausgewählt sind.

16. Gateway nach einem der vorhergehenden Ansprüche, wobei die Isolierung des ersten und zweiten RF-Kanals durch eine oder mehrere Antennenisolierungstechniken ergänzt ist, die aus der Gruppe Antennenentkopplung, Hinzufügen von parasitären Antennenelementen, fehlerhafte Erdungsstrukturen, neutralisierende Leitungen, dielektrische Wände, Metamaterialien auswählbar ist.

## Claims

1. A communications gateway (2) intended to connect at least one LPWAN network and at least one cellular network, the gateway comprising:
• a first RF chain (10) intended to communicate with said at least one LPWAN network, the first RF chain comprising a LPWAN antenna (100), a transponder (30) with a transmitter (31) and a receiver (32) and, installed in series between the transponder and the LPWAN antenna (100):
• at least one filtering block (170), comprising:
• an amplification block (160) comprising an uplink channel and a downlink channel configured in parallel,
• then, going toward the LPWAN antenna (100), a part common to the uplink channel and to the downlink channel, the common part comprising a bandpass filter (80) passing the frequencies in a band of frequencies of said at least one LPWAN network, attenuating the power of the frequencies outside of the band of said LPWAN network,
• and a first high-pass filter (90); and
• a second RF chain (20) toward said cellular network, the second RF chain being suitable for establishing an uplink and downlink connection with the cellular network, a frequency band of the downlink and a frequency band of the uplink of the cellular network being outside of the band of said LPWAN network, the second RF chain comprising a cellular antenna (150), a modem (120) and, installed in series between the modem and the antenna:
• at least one rejection filter (130) attenuating the power of the frequencies within the frequency band of said at least one LPWAN network and passing the frequencies within the frequency band of the downlink and the frequency band of the uplink of the cellular network.

2. The gateway as claimed in claim 1, wherein the second RF chain (20) comprises a single rejection filter (130) and a second high-pass filter (140) between the rejection filter (130) and the cellular antenna (150).

3. The gateway as claimed in claim 1, wherein the second RF chain (20) comprises a single rejection filter (130) connected directly to the cellular antenna (150).

4. The gateway as claimed in claim 1, intended to connect, on the one hand, a sub-group of LPWAN networks selected from amongst a group of LPWAN networks operating in respective frequency bands and, on the other hand, a cellular network, wherein:
• the transponder (35) of the first RF chain (11) comprises a respective transmitter-receiver pair (36, 37) for each of the members of the group of LPWAN networks;
• the first RF chain comprises a plurality of filtering blocks, each of the filtering blocks (171, 172) being associated with a respective member of the group of LPWAN networks and comprising an amplification block (161, 162), a bandpass filter (81, 82) passing the frequencies within the frequency band of said respective member of the group of LPWAN networks and attenuating the power of the frequencies outside of the band of said respective member of the group of LPWAN networks;
• the first RF chain (21) furthermore comprises a LPWAN network multiplexer (180), arranged between the filtering blocks (171, 172) and the first high-pass filter (90);
• the second RF chain comprises several rejection filters (131,132) configured in parallel and respectively associated with each of the members of the group of LPWAN networks, the rejection filter associated with a respective member of the group of LPWAN networks attenuating the power of the frequencies in the band of said respective member of the group of LPWAN networks and passing the frequencies within the frequency band of the downlink and the frequency band of the uplink of the cellular network;
• the second RF chain furthermore comprises a first (135) and a second (136) rejection filter multiplexer for selectively connecting the rejection filters associated with a sub-group of selected LPWAN networks, which first (135) and second (136) rejection filter multiplexers supervise said several rejection filters (131, 132), the second rejection filter multiplexer (136) being on the side of the cellular antenna (150) .

5. The gateway as claimed in claim 4, furthermore comprising a control block (16), the control block (16) comprising:
• a human-machine interface (19) which allows the sub-group of LPWAN networks to be selected;
• a control unit (18) configured for programming the multiplexer (180) of the first RF chain (11) so that the multiplexer (180) connects the filtering blocks (171, 172) associated with the respective members of the sub-group of selected LPWAN networks, and for programming the first and second multiplexers (135, 136) of the second RF chain so that they connect the rejection filters (131, 132) associated with the respective members of the sub-group of selected LPWAN networks.

6. The gateway as claimed in either of claims 4 and 5, wherein the second RF chain (21) comprises a second high-pass filter (140) between the second rejection filter multiplexer (136) and the cellular antenna (150).

7. The gateway as claimed in either of claims 4 and 5, wherein the second rejection filter multiplexer (136) of the second RF chain is connected directly to the cellular antenna.

8. The gateway as claimed in one of claims 1 to 7, wherein said or each filtering block (170, 171, 172) of the first RF chain furthermore comprises a channel selector (70) arranged between the amplification block (160, 161, 162) and the bandpass filter (80, 81, 82) and configured so as to obtain a half-duplex operation in the frequency band of the LPWAN network or of the respective member of the associated group of LPWAN networks.

9. The gateway as claimed in one of claims 1 to 8, wherein said bandpass filter (80, 81, 82) of said or of each filtering block is configured for attenuating by at least 20 dB the power of the frequencies outside of the band of the LPWAN network or of the respective member of the associated group of LPWAN networks.

10. The gateway as claimed in one of claims 1 to 9, wherein said or each rejection filter (131, 132) of the second RF chain is configured for attenuating by at least 20 dB the power of the frequencies within the frequency band of the LPWAN network or of the respective member of the associated group of LPWAN networks.

11. The gateway as claimed in any one of the preceding claims, comprising an electronic board on which the first RF chain (10, 11) and the second RF chain (20, 21) are installed and whose size does not exceed 12 cm in the three dimensions.

12. The gateway as claimed in any one of the preceding claims, wherein said first (10, 11) and second (20, 21) RF chains are adapted to a difference of at most 8 MHz between any one of the frequency bands of the cellular network and the frequency band of the or each member of the group of LPWAN networks.

13. The gateway as claimed in any one of the preceding claims, wherein the uplink or downlink signals on the first RF chain conform to the standard EN 300 220.

14. The gateway as claimed in one of the preceding claims, wherein the bandpass filter or filters are chosen from within the group of surface acoustic wave filters, of bulk acoustic wave filters and of ceramic filters.

15. The gateway as claimed in one of the preceding claims, wherein the rejection filter or filters are chosen from within the group of surface acoustic wave filters, of bulk acoustic wave filters and of ceramic filters.

16. The gateway as claimed in one of the preceding claims, wherein the isolation of the first and second RF chains is completed by one or more techniques for isolation of antennas chosen from within the group of the decoupling of antennas, of the addition of antenna interference elements, of defected ground structures, of neutralizing lines, of dielectric enclosures, of metamaterials.
